# FASCICULE DE BREVET EUROPEEN

(11) **EP 3 486 044 B1**
(45) Date de publication et mention de la délivrance du brevet: **12.02.2020**
(21) Numéro de dépôt: 18206131.7
(22) Date de dépôt: 14.11.2018
(51) Int. Cl.: B25J 18/06, B25J 9/10, B25J 9/14

(54) **TUBE GONFLABLE À GÉOMÉTRIE VARIABLE ET VOLUME CONSTANT, BRAS ROBOTISÉ ET ROBOT**
AUFBLASBARER SCHLAUCH MIT VARIABLER GEOMETRIE UND KONSTANTEM VOLUMEN, ROBOTERARM UND ROBOTER
INFLATABLE TUBE WITH VARIABLE GEOMETRY AND CONSTANT VOLUME, ROBOTIC ARM AND ROBOT

(30) Priorité: 16.11.2017 FR 1771220
(43) Date de publication de la demande: 22.05.2019
(73) Titulaire: Warein, 53100 Mayenne (FR)
(72) Inventeur: VOISEMBERT, Sébastien, 53100 Mayenne (FR)
(74) Mandataire: Cabinet Chaillot

(56) Documents cités:
- WO-A2-2016/167851
- FR-A1- 2 587 644
- FR-A1- 3 004 376

## Description

La présente invention concerne le domaine des articulations d'un bras robotisé polyarticulé à fort élancement - à savoir un bras ayant une grande longueur pour un petit diamètre extérieur - permettant l'inspection d'environnements encombrés, difficiles d'accès, hostiles pour l'homme (risques chimiques ou radiologiques) ou de grandes dimensions.

Plus particulièrement, la présente invention porte sur un tube gonflable à géométrie variable et volume constant, sur un bras robotisé comprenant au moins un tel tube gonflable et sur un robot équipé dudit bras robotisé.

On connaît des robots à fort élancement avec des segments rigides articulés par des liaisons de type pivot, glissière ou pivot glissant. Ces robots sont très précisément manœuvrables, mais leur poids, dû au poids des segments rigides et des liaisons mécaniques les reliant, les rend difficilement déployables et limite l'élancement qui peut être atteint en pratique.

On connaît également les structures robotisées gonflables, notamment les articulations à volume constant.

Il a été proposée dans le brevet français FR2960468 B1 et dans la demande de brevet français FR3004376 A1 une structure articulée gonflable, illustrée sur les Figures 1 et 2, comprenant d'une part une enveloppe tubulaire gonflable 100 qui contient un fluide sous pression et qui possède un tronçon à géométrie variable 101 encadré par deux tronçons à géométrie fixe 102, et, d'autre part, des moyens de déformation dudit tronçon 101 qui sont agencés, conjointement avec l'enveloppe 100, pour engendrer une courbure dudit tronçon 101 de telle manière que ce dernier conserve un volume sensiblement constant.

Les moyens de déformation peuvent comprendre des actionneurs associés à des câbles 103 reliés à l'enveloppe 100 de telle sorte qu'une traction sur l'un des câbles provoque une courbure dudit tronçon 101 en créant un différentiel de longueur dudit tronçon 101 de part et d'autre de l'axe central A3 dudit tronçon 101, tout en maintenant sensiblement constante une section droite dudit tronçon 101.

Le brevet français FR2960468 B1 propose par ailleurs de prévoir des plis sensiblement perpendiculaires à l'axe central A3, de forme annulaire et comportant des portions cousues les unes aux autres selon deux lignes de couture s'étendant de manière symétrique de part et d'autre de l'axe central A3 et des portions libres s'étendant également de manière symétrique de part et d'autre de l'axe central A3. Ces coutures étant situées dans des zones de concentration de contrainte, la résistance mécanique et la capacité de charge de la structure sont conditionnées par la qualité des coutures, lesquelles coutures se sont révélées être assez complexes à réaliser dans un contexte industriel.

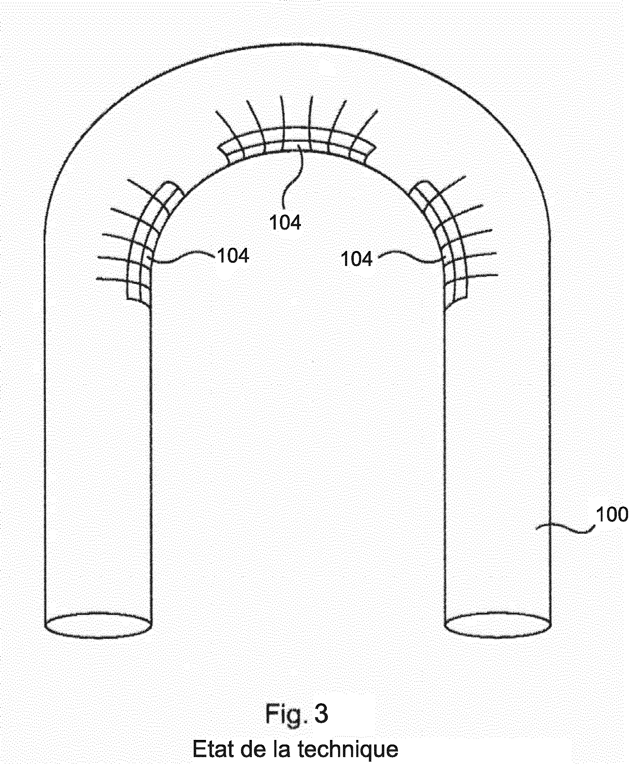

Afin de surmonter cette difficulté, la demande FR3004376 A1 propose de prévoir des moyens de reprise de contrainte qui comprennent deux bandes 104 fixées à l'enveloppe 100 selon la direction longitudinale de cette dernière, en des positions diamétralement opposées, des œillets 105 montés dans des orifices ménagés à cet effet dans les bandes 104 et écartés les uns des autres dans la direction longitudinale, et un lien flexible inextensible 106 enfilés à travers les oeillets 105 de façon à cheminer alternativement sous (dans des portions formant tunnel) et sur la bande 104. Les extrémités des liens 106 sont nouées à des pattes 107 soudées sur l'enveloppe 100 aux extrémités de la bande 104, de telle sorte qu'une traction sur le lien 106, avant que sa deuxième extrémité soit nouée à la patte 107 correspondante, conduit à la formation d'au moins un pli dans les portions de bande situées entre deux entretoises 108 placées chacune dans une portion formant tunnel. Une réduction de 50% de la longueur du tronçon à géométrie variable 101 conduit à la formation de plis autorisant une courbure dudit tronçon 101, par traction sur le câble 103 dont une extrémité est fixée à l'enveloppe 100, d'environ 90° dans un plan médian P dudit tronçon 101 de part et d'autre duquel sont prévus les moyens de déformation. Pour illustrer cette courbure, est illustrée sur la Figure 3 une structure porteuse sous forme d'arche de portique formée par une telle enveloppe 100 munies de trois bandes 104, représentées schématiquement, une au milieu de l'enveloppe 100 et les deux autres disposées de manière symétrique de part et d'autre du milieu de l'enveloppe 100 pour obtenir trois courbes successives.

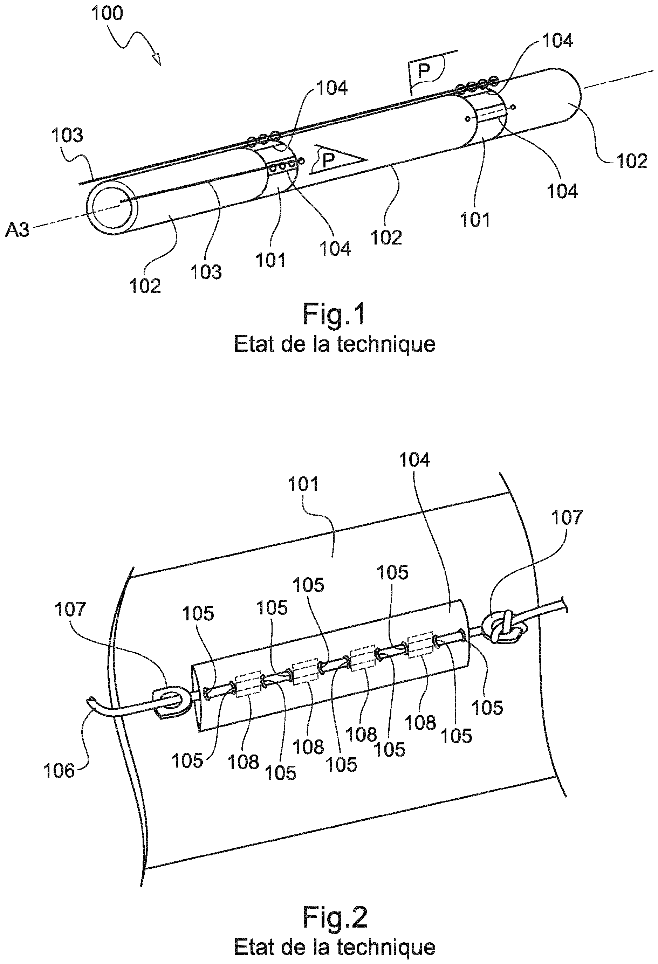

Un inconvénient que présente la structure articulée gonflable illustrée sur les Figures 1 à 3 est, qu'en pratique, le tronçon à géométrie variable pourrait être amené à prendre n'importe quelle autre forme que celle prévue, pourvu qu'elle conserve son volume ou qu'elle l'augmente, comme par exemple des formes en S ou en coudes, ce qui peut conduire à l'apparition de bourrelets. Dans le cas où la structure articulée gonflable est utilisée comme partie d'un bras robotisé, de tels bourrelets représentent des inconvénients majeurs pour le guidage du bras.

Il est donc nécessaire d'éviter que le tronçon à géométrie variable puisse adopter une forme autre que celle voulue, ce qui requiert donc que ledit tronçon soit contraint dans la forme voulue. Cette contrainte sera obtenue par un actionnement particulier dudit tronçon, actionnement qui sera choisi précisément car il permet l'obtention de la forme voulue.

Un autre inconvénient de cette structure articulée gonflable est qu'elle n'autorise un mouvement que dans un seul plan, à savoir le plan médian de part et d'autre duquel les moyens de déformation sont prévus.

On comprendra toutefois que pour une application à un bras robotisé, il serait particulièrement avantageux de disposer d'une solution permettant un mouvement qui ne soit pas limité à un seul plan.

A l'heure actuelle, la seule articulation gonflable qui autorise des mouvements dans plusieurs plans est la restriction de section : deux tronçons gonflables ne sont reliés qu'au niveau d'un point, à la manière d'un chapelet de saucisses. Malheureusement, on comprend aisément qu'une telle articulation à restriction de section n'offre aucune raideur en torsion puisque la surface quadratique de l'articulation est nulle, ce qui la rend inutilisable en pratique.

La présente invention vise donc à répondre au besoin pour une articulation à volume constante permettant des mouvements non limités à un seul plan, tout en présentant une raideur satisfaisante en torsion.

Selon la présente invention, ce besoin peut être satisfait par un tube gonflable munis de moyens permettant aux efforts de traction longitudinale, qui sont exercés par la pression interne dans le tube gonflable, d'être repris non pas en surface, comme dans l'état antérieur de la technique, mais sur l'axe central du tube gonflable. Ainsi, comme pour une articulation à restriction de section, dans un tel tube gonflable tous les efforts de traction sont repris en au moins un point sur l'axe central, mais, du fait que la section droite du tube gonflable est non nulle, le tube gonflable présente une certaine raideur en torsion qui le rend utilisable en pratique, notamment pour une application à un bras robotisé.

La présente invention a ainsi pour objet un tube gonflable à géométrie variable et volume constant, comprenant une enveloppe gonflable en matériau souple étanche et possédant un axe central, le tube gonflable comprenant en outre des moyens de reprise de contrainte de tension longitudinale appliquée à l'enveloppe par la pression interne dans cette dernière, caractérisé par le fait que les moyens de reprise de contrainte comprennent des paires d'un premier et d'un deuxième moyen de liaison inextensible s'étendant à l'intérieur de l'enveloppe, lesdites paires étant réparties dans N demi-plans longitudinaux de l'enveloppe, s'étendant chacun entre l'axe central de l'enveloppe et une ligne génératrice respective de la surface de l'enveloppe, N étant un entier diviseur de 360 et supérieur ou égal à 2, et par le fait que, dans chaque demi-plan longitudinal, le ou les premiers moyens de liaison inextensibles dudit demi-plan longitudinal sont orientés suivant une première direction longitudinale qui est inclinée par rapport à l'axe central de l'enveloppe et le ou les deuxièmes moyens de liaison inextensibles sont orientés suivant une seconde direction longitudinale qui est également inclinée par rapport à l'axe central de l'enveloppe, d'un même angle d'inclinaison que la première direction longitudinale, et les premier(s) et deuxième(s) moyens de liaison inextensibles sont fixés, à une première extrémité, sur ladite ligne génératrice respective de la surface de l'enveloppe et passent par ou se terminent sur l'axe central (A) de l'enveloppe, ce par quoi le tube gonflable est apte à être courbé autour de N premiers axes de pivotement, chaque premier axe de pivotement à la fois se situant dans un demi-plan longitudinal respectif et étant perpendiculaire à l'axe central de l'enveloppe, et autour de N seconds axes de pivotement, chaque second axe de pivotement étant à la fois perpendiculaire à l'axe central et perpendiculaire à l'un respectif des N premiers axes de pivotement, les contraintes de tension longitudinale appliquées à l'enveloppe par la pression interne dans cette dernière étant concentrées sur l'axe central par les premier(s) et deuxième(s) moyens de liaison inextensibles, que le tube gonflable soit courbé ou non.

Dans la présente demande, l'orientation d'un moyen de liaison inextensible est la direction le long de laquelle le moyen de liaison inextensible transmettra une contrainte de tension longitudinale appliquée à l'enveloppe par la pression interne.

De préférence, les N demi-plans longitudinaux sont à équidistance angulaire les uns des autres.

Selon un mode de réalisation particulier de la présente invention, le ou chaque premier moyen de liaison inextensible et le ou chaque deuxième moyen de liaison inextensible sont formés respectivement par un premier et un deuxième lien inextensible.

Les moyens de reprise de contrainte peuvent comprendre, pour chaque demi-plan longitudinal, une série de premiers liens inextensibles et une série de deuxièmes liens inextensibles, lesdits liens inextensibles étant disposés les uns à la suite des autres suivant l'axe central de l'enveloppe de façon à former une série de paires de premier et deuxième liens inextensibles.

Le nombre N de demi-plans longitudinaux dans lesquels sont réparties les paires de premier et deuxième moyens de liaison inextensibles peut être pair, ce par quoi lesdites paires de premier et deuxième moyens de liaison inextensibles sont réparties dans un nombre N/2 de couples de demi-plans longitudinaux définis de telle sorte que tout demi-plan longitudinal est parallèle à l'autre demi-plan longitudinal avec lequel il forme un couple, les premiers moyens de liaison inextensibles de deux demi-plans longitudinaux appartenant à un même couple étant formés par un premier lien inextensible ou une série de premiers liens inextensibles et les deuxièmes moyens de liaison inextensibles desdits deux demi-plans longitudinaux étant formés par un deuxième lien inextensible ou une série de deuxièmes liens inextensibles, le ou les premiers liens inextensibles croisant le ou les deuxièmes liens inextensibles sur l'axe central de l'enveloppe, des premières extrémités des premier(s) et deuxième(s) liens inextensibles étant fixées à une première région de l'enveloppe tandis que des secondes extrémités des premier(s) et deuxième(s) liens inextensibles sont fixées à une seconde région de l'enveloppe, lesdites première et seconde régions de l'enveloppe étant situées de part et d'autre, dans la direction de l'axe central de l'enveloppe, du croisement desdites première et seconde directions longitudinales, les premier(s) et deuxième(s) liens inextensibles rapprochant lesdites première et seconde régions de l'enveloppe de manière à ce qu'à l'état mise en surpression, cette dernière ne présente pas de tension longitudinale.

Prévoir que les moyens de reprise de contrainte comprennent une telle série de premiers liens inextensibles et une telle série de deuxièmes liens inextensibles, autorise le tube gonflable à être courbé sur une plus grande longueur de l'enveloppe : l'amplitude du mouvement est augmentée.

Conformément à un agencement particulier préféré, les premiers et deuxièmes liens inextensibles formant les premiers et deuxièmes moyens de liaison inextensibles de tout couple de demi-plans longitudinaux sont placés suffisamment proches les uns des autres pour que chacun des premiers liens inextensibles croise des deuxièmes liens inextensibles, et réciproquement, les premiers et deuxièmes liens inextensibles étant tous fixés à un unique troisième lien inextensible qui s'étend le long de l'axe central de l'enveloppe ou tous les premiers et deuxièmes liens inextensibles appartenant au même couple de demi-plans longitudinaux sont fixés à un lien inextensible respectif qui s'étend le long de l'axe central de l'enveloppe. Un tel agencement des liens inextensibles permet là encore d'augmenter l'amplitude du mouvement du tube gonflable. Le lien inextensible qui s'étend le long de l'axe central de l'enveloppe sert à éviter que l'enveloppe ne se tende lors d'un mouvement d'amplitude accrue.

On souligne ici qu'en pratique les liens inextensibles, dans la mesure où ils se croisent et étant donné qu'ils ont une épaisseur non nulle, ne seront pas parfaitement dans les demi-plans longitudinaux. Ceci est également vrai au point de croisement entre deux liens inextensibles. On comprendra donc aisément que la présente invention couvre également les cas où les moyens de liaison inextensibles n'appartiennent pas parfaitement à un demi-plan longitudinal, mais par exemple sont légèrement décalés de celui-ci, pourvu que les contraintes de tension longitudinale appliquée à l'enveloppe puissent être transmises le long des première et seconde directions des moyens de liaison inextensibles de façon à être concentrées sur l'axe central de l'enveloppe.

Par exemple, le nombre N de demi-plans longitudinaux dans lesquels sont réparties les paires de premier et deuxième moyens de liaison inextensibles est égal à 4, et les deux couples de demi-plans longitudinaux sont, de préférence, perpendiculaires l'un à l'autre.

Selon un autre mode de réalisation de la présente invention, les premier et deuxième moyens de liaison inextensible appartenant à un même demi-plan longitudinal comprennent une bande de matière inextensible fibreuse dont des premières fibres sont orientées suivant ladite première direction longitudinale et dont des secondes fibres sont orientées suivant ladite seconde direction longitudinale, chaque bande étant fixée, au niveau d'un bord longitudinal dit extérieur, à l'enveloppe, et étant reliée, au niveau d'un bord longitudinal dit intérieur, à un lien inextensible.

Par exemple, le nombre N de demi-plans longitudinaux dans lesquels sont réparties les paires de premier et deuxième moyens de liaison inextensibles est égal à 4 et les demi-plans longitudinaux sont à équidistance angulaire les uns des autres, le tube gonflable comprenant un premier ensemble bande formé par des première et deuxième desdites bandes s'étendant dans un premier plan longitudinal médian de l'enveloppe, et un second ensemble bande formé par des troisième et quatrième desdites bandes, lesdites troisième et quatrième bandes de matière s'étendant dans un second plan longitudinal médian de l'enveloppe qui est perpendiculaire audit premier plan longitudinal médian, chacune des première à quatrième bandes de matière étant reliée, au niveau d'un bord longitudinal dit intérieur, à un lien inextensible qui s'étend le long de l'axe central de l'enveloppe, et étant fixée, au niveau d'un bord longitudinal dit extérieur, à l'enveloppe.

Selon la présente invention, dans les deux modes de réalisation mentionnés ci-dessus, le tube gonflable pourra être mis en mouvement de manière passive, à savoir par une action à l'extérieur du tube gonflable, comme par exemple par traction sur un ou des câbles d'actionnement comme dans l'état de la technique. A cet effet, l'enveloppe pourra présenter, le long de sa surface extérieure, des moyens de guidage d'au moins un câble de commande servant à courber le tube gonflable.

En variante, toujours selon la présente invention, le tube gonflable pourra être mis en mouvement d'une manière active, à savoir par variation des pressions internes à l'intérieur de différents volumes indépendants qui sont définis dans l'enveloppe, dans l'un ou l'autre des deux modes de réalisation mentionnés ci-dessus.

Ainsi, lorsque les moyens de reprise de contrainte définissent à l'intérieur de l'enveloppe un nombre N de compartiments séparés les uns des autres par les moyens de liaison inextensibles, l'enveloppe pourra présenter N chambres gonflables, chacune formées dans ou par un compartiment respectif, chaque chambre gonflable comprenant une entrée de fluide et une sortie de fluide pour permettre le gonflage et le dégonflage de ladite chambre gonflable. On imagine aisément que le tube gonflable puisse être ainsi divisé en 3, 4, etc., compartiments.

Une surpression dans une chambre entraîne une augmentation du volume de celle-ci et donc une courbure correspondante du tube de gonflage. Ainsi, dans le cas où quatre compartiments sont définis dans l'enveloppe, si l'on met par exemple les deux chambres se situant d'un même côté dudit premier plan longitudinal médian de l'enveloppe en surpression, alors le tube de gonflage sera courbé dans la direction opposée autour du premier axe de pivotement.

De préférence, l'enveloppe est formée par une toile dont les fibres sont disposées en biais par rapport à l'axe central de l'enveloppe, de préférence à un angle de 45°. Ceci permet au tube de gonflage de mieux transmettre les efforts de torsion qui lui sont appliqués à une extrémité.

La présente invention a également pour objet un bras robotisé, caractérisé par le fait qu'il comprend :
- au moins un tube gonflable tel que défini ci-dessus, ou plusieurs tels tubes gonflables en communication fluidique ou non les uns à la suite des autres,
- un outil porté à une extrémité distale du bras, laquelle extrémité distale est formée par l'extrémité d'un tube gonflable qui est obturée, notamment par des coutures ou par l'outil,
- des moyens d'actionnement de l'outil,
- des moyens de liaison étanche à des moyens d'injection de fluide dans le bras, notamment à une extrémité proximale du bras dans le cas où les tubes gonflables sont en communication fluidique les uns à la suite des autres, ou sinon à chacun des tubes gonflables, laquelle extrémité proximale est formée par une extrémité obturée ou non d'un tube gonflable, et
- des moyens de commande du mouvement du ou de chaque tube gonflable autour des N premier(s) et N second(s) axes de pivotement.

La présente invention a également pour objet un robot caractérisé par le fait qu'il comprend au moins un bras robotisé tel que défini ci-dessus, des moyens d'injection de fluide reliés de manière étanche à l'au moins un bras robotisé, notamment à l'extrémité proximale de ce dernier ou à chacun de ses tubes gonflables, pour injecter un fluide dans l'au moins un bras robotisé en vue de son gonflage, et des moyens de commande commandant les moyens de commande du mouvement du ou de chaque tube gonflable et les moyens d'actionnement de l'outil.

La présente invention a également pour objet un bras robotisé, caractérisé par le fait qu'il comprend :
- au moins un tube gonflable tel que défini ci-dessus, ou plusieurs tels tubes gonflables en communication fluidique ou non les uns à la suite des autres,
- un outil porté à une extrémité distale du bras, laquelle extrémité distale est formée par l'extrémité d'un tube gonflable qui est obturée, notamment par des coutures ou par l'outil,
- des moyens d'actionnement de l'outil,
- des moyens d'injection de fluide dans le bras, notamment à une extrémité proximale du bras dans le cas où les tubes gonflables sont en communication fluidique les uns à la suite des autres, ou sinon à chacun des tubes gonflables, laquelle extrémité proximale est formée par une extrémité obturée ou non d'un tube gonflable, et
- des moyens de commande du mouvement du ou de chaque tube gonflable autour des N premier(s) et N second(s) axes de pivotement.

La présente invention a également pour objet un robot caractérisé par le fait qu'il comprend au moins un bras robotisé tel que défini ci-dessus, des moyens de commande des moyens d'injection de fluide et des moyens de commande commandant les moyens de commande du mouvement du ou de chaque tube gonflable et les moyens d'actionnement de l'outil.

Le tube gonflable peut ainsi être gonflé à l'aide d'un fluide tel que : gaz pur, mélange gazeux, liquide (s)...

Les moyens d'injection de fluide peuvent être une source d'admission de fluide depuis l'extérieur ou une source interne de fluide sous pression telle qu'une cartouche de gaz.

Pour mieux illustrer l'objet de la présente invention, on va en décrire ci-après plusieurs modes de réalisation particuliers, avec référence aux dessins annexés.

Sur ces dessins :
- les Figures 1 et 2 sont des vues schématiques respectivement d'un bras robotisé et d'une partie d'un tronçon à géométrie variable selon l'état antérieur de la technique, à savoir la demande FR3004376 A1 ;
- la Figure 3 est une vue schématique en élévation d'une structure de type portique conforme à la demande FR3004376 A1 ;
- la Figure 4 est une vue schématique en perspective d'une partie d'un bras robotisé selon le premier mode de réalisation de la présente invention ;
- les Figures 5 et 6 sont des vues schématiques en perspective du bras de la Figure 4, représenté après avoir été courbé autour d'un premier axe de pivotement et d'un second axe de pivotement, respectivement ;
- la Figure 7 est une vue schématique en perspective du bras selon une variante du premier mode de réalisation ;
- la Figure 8 est une vue schématique en perspective du bras de la Figure 7, représenté après avoir été courbé autour d'un second axe de pivotement ;
- la Figure 9 est une vue schématique en perspective d'un tube de gonflage selon le second mode de réalisation de la présente invention ;
- la Figure 10 est une vue schématique en perspective d'une variante du second mode de réalisation ;
- la Figure 11 est une vue schématique d'un tube de gonflage conforme au second mode de réalisation et à sa variante, représenté après avoir été courbé autour d'un premier axe de pivotement ;
- la Figure 12 est une vue schématique du tube de gonflage selon le second mode de réalisation, au cours de sa fabrication selon un exemple de procédé de fabrication ; et
- la Figure 13 est une vue schématique en perspective du tube de gonflage obtenu avec cet exemple de procédé de fabrication.

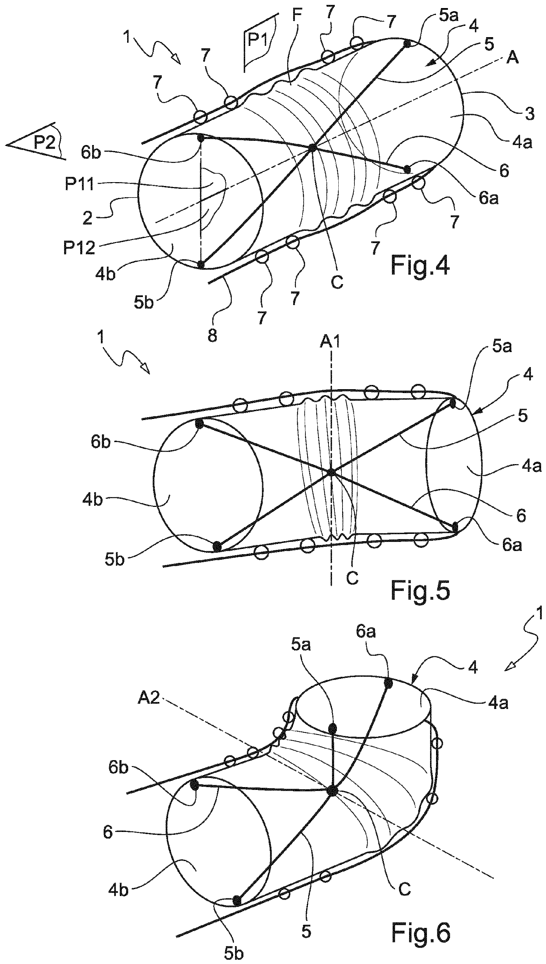

Si l'on se réfère tout d'abord à la Figure 4, on peut voir que l'on y a représenté de manière schématique une partie d'un bras robotisé selon le premier mode de réalisation de la présente invention.

Ce bras robotisé comprend un tube gonflable 1 qui est configuré pour être gonflé par un fluide de type air ou liquide, voire un mélange hétérogène comprenant des solides, et présente une extrémité d'entrée de fluide 2 et une extrémité de sortie de fluide 3. Les extrémités d'entrée de fluide 2 et de sortie de fluide 3 peuvent avantageusement être confondues.

Les extrémités d'entrée de fluide 2 et de sortie de fluide 3 sont représentées schématiquement sur la Figure 4. Ainsi, l'extrémité d'entrée de fluide 2 peut être reliée de manière étanche à un compresseur ou un ventilateur, pour faire circuler un fluide vers l'extrémité de sortie de fluide 3 et ainsi gonfler le tube gonflable 1. L'extrémité d'entrée de fluide 2 peut également être obturée, une cartouche de gaz faisant circuler le fluide vers l'extrémité de sortie de fluide 3 pour gonfler le tube gonflable 1.

L'extrémité de sortie de fluide 3 est quant à elle obturée, et peut, lorsque le tube gonflable 1 est utilisé sur un bras robotisé ou un robot, porter un outil.

Le tube gonflable 1 comprend une enveloppe 4 faite en un matériau souple étanche, par exemple, un film vinyle, une toile polyamide enduite de polyuréthane, polychlorure de vinyle (PVC), ou similaires.

Dans le mode de réalisation non limitatif représenté sur les Figures, l'enveloppe 4 est de section circulaire, mais la présente invention n'est bien entendu pas limitée sur cet aspect, et l'enveloppe 4 peuvent avoir toute section, par exemple carrée ou ovale. L'enveloppe 4 a toutefois un axe central A.

Le tube gonflable 1 est remarquable en ce qu'il comprend en outre un premier lien inextensible 5 et un deuxième lien inextensible 6 qui forment des moyens de reprise de contrainte permettant de concentrer sur l'axe central A de l'enveloppe 4 la contrainte de tension longitudinale appliquée à l'enveloppe 4.

A cet effet, le premier lien inextensible 5 est fixé, au niveau d'une première extrémité 5a, à la surface intérieure de l'enveloppe 4, dans une première région 4a de cette dernière, et, au niveau d'une seconde extrémité 5b, également à la surface intérieure de l'enveloppe 4 mais dans une seconde région 4b de cette dernière. Les points de fixation des extrémités 5a, 5b du premier lien inextensible 5 à l'enveloppe 4 sont choisis pour que le premier lien inextensible 5 coupe l'axe central A de l'enveloppe 4. En d'autres termes, le premier lien inextensible 5 appartient à un premier plan longitudinal médian P1 de l'enveloppe 4.

De la même manière, le deuxième lien inextensible 6 est de même longueur que le premier lien inextensible 5 et est fixé, au niveau de ses première et seconde extrémités 6a, 6b, à la surface intérieure de l'enveloppe 4, respectivement dans la première région 4a et dans la seconde région 4b de l'enveloppe 4. Les points de fixation du deuxième lien inextensible 6 sont en outre choisis d'une part pour qu'il appartienne également audit premier plan P1 et, d'autre part, pour que les première et seconde extrémités 6a, 6b se situent dans la même section transversale de l'enveloppe 4 que les première et secondes extrémités 5a, 5b, respectivement, du premier lien inextensible 5.

Par conséquent, les premier et deuxième liens inextensibles 5, 6 se croisent en un point de croissement C qui se situe sur l'axe central A de l'enveloppe 4.

Par ailleurs, les deux sections de l'enveloppe 4 dans lesquelles sont fixées lesdites extrémités 5a, 5b, 6a, 6b des liens inextensibles 5, 6, sont choisies pour être écartées l'une de l'autre, avant fixation des liens inextensibles 5, 6, d'une distance légèrement supérieure à celle entre lesdites deux sections après fixation des liens inextensibles 5, 6. Ainsi, les liens inextensibles 5, 6, une fois fixés, rapprocheront les deux régions 4a, 4b l'une de l'autre, évitant que l'enveloppe 4 ne soit tendue longitudinalement, avec par exemple formation d'au moins une fronce F. En d'autres termes, dans cet état, dégonflé ou sans surpression, l'enveloppe 4 ne présente aucune tension longitudinale à sa surface.

On a représenté schématiquement des éléments de passage 7, par exemple du type similaire aux pattes 107 de la demande FR3004376 A1 illustrée sur les Figures 1 à 3, régulièrement répartis sur l'extérieur de l'enveloppe 4 le long de deux lignes diamétralement opposées et appartenant au premier plan P1. Ces éléments de passage 7 servent à guider un câble 8 constituant un moyen de commande du mouvement du tube gonflable 1.

On souligne ici que, pour une meilleure visibilité des Figures, on a représenté uniquement deux lignes d'éléments de passage 7 dans le premier plan P1. Toutefois, on prévoira de la même manière deux lignes d'éléments de passage 7 diamétralement opposées et appartenant à un second plan longitudinal médian P2 perpendiculaire audit premier plan P1, un câble 8 s'étendant également le long de chaque telle ligne.

Comme dans l'état antérieur de la technique, une extrémité de chaque câble 8 est rendue solidaire de l'enveloppe 4, ici au niveau de la première région 4a, tandis que l'autre extrémité est reliée à des moyens de commande du câble.

Si l'on se réfère maintenant à la Figure 5, on peut voir que l'on y a représenté le tube de gonflage 1 après que l'un des câbles 8 s'étendant dans le second plan P2 a été tiré, forçant ainsi le tube de gonflage 1 à se courber vers la droite lorsque l'on observe la Figure 5, la première région 4a de l'enveloppe 4 se déplaçant par rapport à la seconde région 4b comme si elle pivotait autour d'un premier axe de pivotement A1, ici vertical. Le premier axe de pivotement A1 passe par l'axe central A et appartient au premier plan P1.

Si l'on se réfère maintenant à la Figure 6, on peut voir que l'on y a représenté le tube de gonflage 1 après que le câble 8 situé au-dessus de l'enveloppe 4 sur la Figure 1 et s'étendant donc dans le premier plan P1 a été tiré, forçant ainsi le tube de gonflage 1 à se courber vers le haut lorsque l'on observe la Figure 6, la première région 4a de l'enveloppe 4 se déplaçant par rapport à la seconde région 4b comme si elle pivotait autour d'un second axe de pivotement A2, ici horizontal. Le second axe de pivotement A2 passe par l'axe central A et appartient au second plan P2.

Ainsi, on peut constater que le tube gonflable 1 selon la présente invention permet un mouvement qui n'est pas limité à un seul plan, tout en conservant un volume constant et une surface quadratique non nulle, et donc une raideur satisfaisante en torsion.

Ceci est possible car les premier et deuxième liens inextensibles 5, 6, du fait de leurs fixations à la surface de l'enveloppe 4 et de leur caractère inextensible, concentrent à leur point de croisement C, à savoir sur l'axe central A de l'enveloppe 4, les contraintes de tension longitudinale sur la surface de l'enveloppe 4, qui résultent de la pression interne dans l'enveloppe 4. Le point de croisement C constituera ainsi le centre de pivotement autour duquel le tube de gonflage 1 peut se courber.

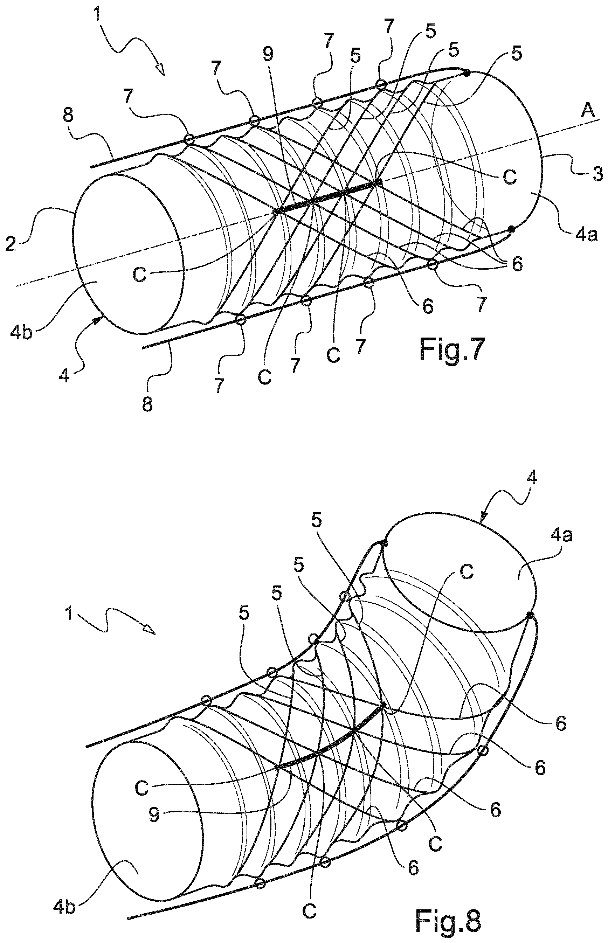

Si l'on se réfère maintenant aux Figures 7 et 8, on peut voir que l'on y a représenté de manière schématique un tube de gonflage selon une variante du premier mode de réalisation des Figures 4 à 6.

Ce tube de gonflage, également désigné par le chiffre de référence 1, se distingue de celui représenté sur les Figures 4 à 6 uniquement en ce que sont prévues une série de premiers liens inextensibles 5 parallèles entre eux et une série de deuxièmes liens inextensibles 6, également parallèles entre eux et en même nombre que les premiers liens inextensibles 5.

Les premiers et deuxièmes liens inextensibles 5, 6 sont disposés suffisamment proches pour que chaque premier lien inextensible 5 croise plusieurs deuxième lien inextensible 6, et réciproquement. Toutefois, les premiers et deuxième liens inextensibles 5, 6 sont avantageusement disposés par paires, de telle sorte qu'à chaque premier lien inextensible 5 correspond un deuxième lien inextensible 6 qu'il croise en un point de croisement C sur l'axe central A de l'enveloppe 4.

Afin d'éviter que l'enveloppe 4 ne se tende, un troisième lien inextensible 9 est fixé, par tout moyen approprié, aux premiers et deuxièmes liens inextensibles 5, 6, au niveau de tous les points de croisement C. En d'autres termes, le troisième lien inextensible 9 s'étend également le long de l'axe central A de l'enveloppe 4. Le troisième lien inextensible 9 est plus court que l'enveloppe 4, pour éviter qu'elle ne se tende. Plus le troisième lien inextensible 9 est court, plus l'amplitude de mouvement est grande.

Le tube gonflable 1 comprend là encore les éléments de passage 7 et câbles 8 et il peut être mis en mouvement autour des premier et second axes de pivotement A1 et A2. On a représenté sur la Figure 8 le tube de gonflage 1 dans la position analogue à la Figure 6, à savoir après courbure autour du second axe de pivotement A2.

L'intérêt de la configuration des premiers et deuxièmes liens inextensibles 5, 6 comme illustrée sur les Figures 7 et 8 est d'augmenter l'amplitude du mouvement du tube gonflable 1.

Le premier mode de réalisation illustré sur les Figures 4 à 8 n'est qu'une configuration particulière du principe à la base de la présente invention. Dans ce premier mode de réalisation, on peut considérer que les premier(s) et deuxième(s) liens inextensibles 5, 6 sont répartis dans un couple de demi-plans longitudinaux P11 et P12 de l'enveloppe 4, dont les traces sont illustrées seulement sur la Figure 4, et chaque demi-plan longitudinal P11 et P12 s'étend entre l'axe central A et une ligne génératrice respective de l'enveloppe 4 qui appartient au premier plan longitudinal médian P1. Ainsi, les premier et deuxième liens inextensibles 5, 6 forment respectivement, dans chaque demi-plan P11 et P12, les premier et deuxième moyens de liaison inextensibles de la présente invention.

L'intérêt du premier mode de réalisation décrit ci-dessus est qu'un même lien inextensible forme des moyens de liaison inextensibles dans deux demi-plans longitudinaux de l'enveloppe.

Bien entendu, il serait possible de prévoir pour chaque demi-plan P11 et P12 une paire de premier et deuxième liens inextensibles dont des premières extrémités sont fixées à une région d'extrémité respective de l'enveloppe et dont les secondes extrémités sont fixées l'une à l'autre au niveau d'un point situé sur l'axe central de l'enveloppe.

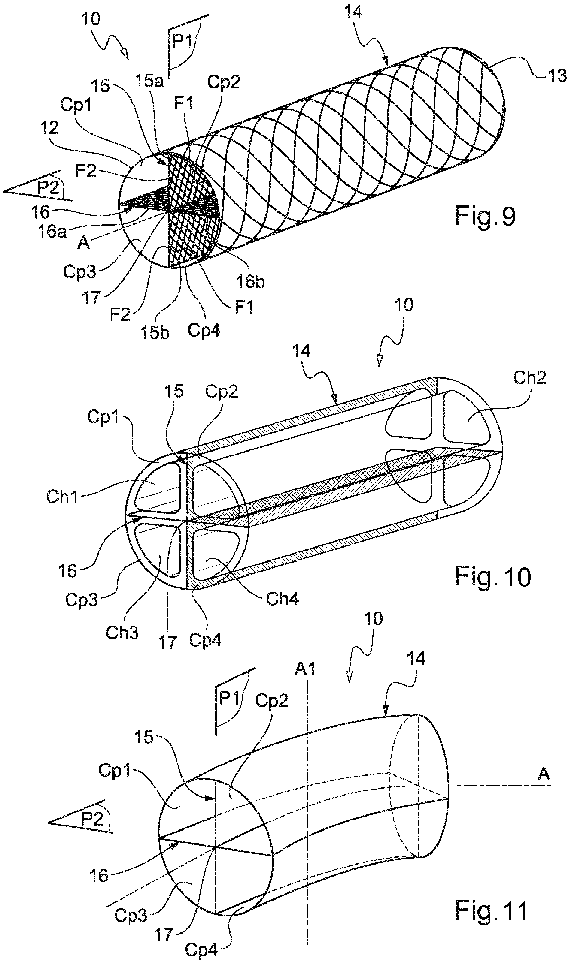

Si l'on se réfère maintenant aux Figures 9 à 13, on peut voir que l'on y a représenté un tube gonflable 10 selon un second mode de réalisation de la présente invention, qui repose sur le même principe de concentration sur l'axe central A, par des moyens de liaison inextensibles, des contraintes de tension longitudinale exercées sur l'enveloppe lorsque le tube gonflable 10 est sous pression.

Le tube gonflable 10 comprend de nouveau des extrémités d'entrée de fluide 12 et de sortie de fluide 13 sur le même principe que les extrémités 2 et 3 du premier mode de réalisation, et une enveloppe 14.

Le tube gonflable 10 est remarquable en ce que les moyens de liaison inextensibles s'étendent à la fois dans le premier plan longitudinal médian P1 de l'enveloppe 14, mais également dans le second plan longitudinal médian P2, divisant ainsi l'intérieur de l'enveloppe 14 en quatre compartiments Cp1, Cp2, Cp3 et Cp4.

Une telle configuration permet d'encore mieux répartir les efforts dans l'enveloppe 14 lors de la courbure du tube de gonflage 10.

On a illustré de manière schématique sur la Figure 9 le fait que l'enveloppe 14 est réalisée en une toile dont les fibres sont disposées en biais par rapport à l'axe central A de l'enveloppe 14, ce qui permet de mieux transmettre le long du tube gonflable 10 les efforts de torsion. En particulier, des premières fibres sont orientées suivant ladite première direction longitudinale, tandis que des secondes fibres sont orientées dans ladite seconde direction longitudinale. On souligne ici que cette caractéristique de l'enveloppe 14 peut également être appliquée à l'enveloppe 4 selon le premier mode de réalisation.

Dans ce second mode de réalisation, les moyens de liaison inextensibles sont formés par un premier ensemble bande 15 dans le premier plan P1 et un second ensemble bande 16 dans le second plan P2, lesquels ensembles 15, 16 se croisent sur l'axe central A de l'enveloppe 14.

Le premier ensemble bande 15 comprend des première et deuxième bandes 15a, 15b de matière inextensible fibreuse dont des premières fibres F1 sont orientées suivant ladite première direction longitudinale et dont des secondes fibres F2 sont orientées suivant ladite seconde direction longitudinale. De la même manière, le second ensemble bande 16 comprend des troisième et quatrième bandes 16a, 16b de matière inextensible fibreuse dont des premières fibres F1 sont orientées suivant ladite première direction longitudinale et dont des secondes fibres F2 sont orientées suivant ladite seconde direction longitudinale.

Un lien inextensible 17 s'étend le long de l'axe central A et les première à quatrième bandes de matière inextensible 15a, 15b, 16a, 16b y sont fixées par tout moyen approprié.

On comprend aisément que, du fait de l'orientation desdites fibres F1 et F2, les première à quatrième bandes de matière inextensible assurent la même fonction de concentration des contraintes de tension longitudinale de l'enveloppe 4 sur l'axe central A de cette dernière lors d'une mise sous pression du tube gonflable 10.

Ainsi, bien qu'ils n'aient pas été représentés, on pourra de nouveau prévoir des éléments de passage et des câbles pour une mise en mouvement de manière passive du tube gonflable 10, par traction sur un câble.

Toutefois, comme illustré sur la Figure 10, un avantage du principe à la base du second mode de fonctionnement, est qu'il est possible de prévoir dans chaque compartiment Cp1, Cp2, Cp3 et Cp4 une chambre gonflable Ch1, Ch2, Ch3, Ch4 qui sera indépendante des autres chambres. Chaque chambre Ch1, Ch2, Ch3, Ch4 comportera ainsi une entrée de fluide et une sortie de fluide, qui pourront être avantageusement confondues.

Les chambres Ch1, Ch2, Ch3, Ch4 forment ainsi des moyens de commande du mouvement du tube gonflable 10, par mise en surpression de certaines des chambres Ch1, Ch2, Ch3, Ch4 et dégonflage des autres.

Par exemple, on a illustré sur la Figure 11 le tube gonflable 10 lorsque les chambres Ch1 et Ch3 (non représentées), qui se situent du même côté que le premier plan P1, mais de part et d'autre du second plan P2, sont mises en surpression avec dégonflage des chambres Ch2 et Ch4 (non représentées) : le tube gonflable 10 est courbé autour du premier axe de pivotement A1 de la même manière qu'illustrée sur la Figure 5 pour le premier mode de réalisation.

De la même manière :
- une surpression dans les chambres Ch2 et Ch4 et un dégonflage des chambres Ch1 et Ch3 conduisent à une courbure du tube gonflable 10 autour du premier axe de pivotement A1, mais dans la direction opposée à celle illustrée sur la Figure 11 ;
- une surpression dans les chambres Ch3 et Ch4 et un dégonflage des chambres Ch1 et Ch2 conduisent à une courbure du tube gonflable 10 autour du second axe de pivotement A2, de la même manière qu'illustrée sur la Figure 6 pour le premier mode de réalisation ; et
- une surpression dans les chambres Ch1 et Ch2 et un dégonflage des chambres Ch3 et Ch4 conduisent à une courbure du tube gonflable 10 autour du second axe de pivotement A2, mais dans la direction opposée.

On constate donc que le tube gonflable 10 permet un mouvement qui n'est pas limité à un seul plan, tout en conservant un volume constant et une surface quadratique non nulle, et donc une raideur satisfaisante en torsion, avec une mise en mouvement de manière active.

Les chambres Ch1, Ch2, Ch3, Ch4 pourront être formées par des vessies introduites dans les différents compartiments Cp1, Cp2, Cp3, Cp4, ou pourront être formées directement par lesdits compartiments, auquel cas l'enveloppe 14 et les première à quatrième bandes de matière 15a, 15b, 16a, 16b seront faites en matériau étanche.

On souligne ici que l'on peut également considérer, dans le second mode de réalisation illustré sur les Figures 9 à 11, que les premier et second ensembles bandes 15, 16 sont répartis dans deux couples de demi-plans longitudinaux, comme pour le premier mode de réalisation illustré sur les Figures 4 à 8 : pour chaque demi-plan longitudinal, les premier et deuxième moyens de liaison inextensibles sont formés par les fibres de la bande respective 15a, 15b, 16a, 16b.

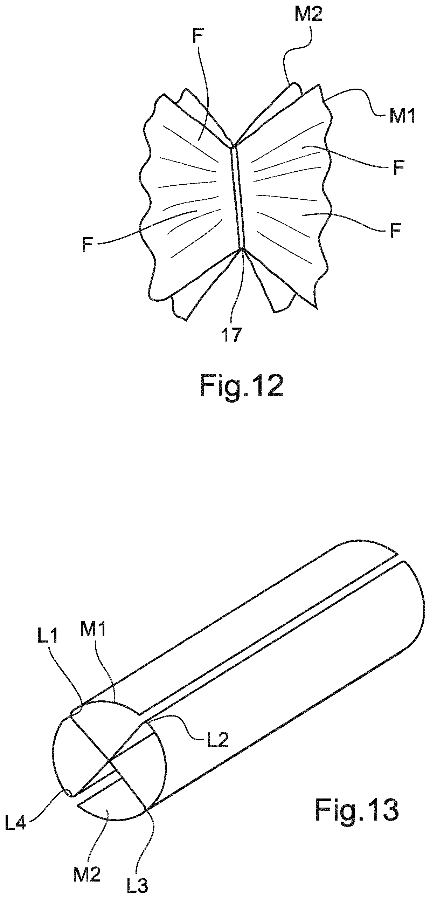

On va maintenant décrire avec référence aux Figures 12 et 13 un exemple de procédé de fabrication du tube gonflable 10, dans lequel l'enveloppe 14 et les première à quatrième bandes 15a, 15b, 16a, 16b sont formées conjointement les unes avec les autres.

Dans une première étape, on dispose l'un au-dessus de l'autre deux morceaux de toile rectangulaires M1 et M2 (Figure 12), dont des premières fibres sont inclinées suivant ladite première direction longitudinale et des secondes fibres sont inclinées suivant ladite seconde direction longitudinale, l'inclinaison étant ici par rapport à une direction axiale des morceaux de toile.

Ces deux morceaux de toile M1 et M2 sont assemblés l'un à l'autre le long de leurs axes médians, par exemple par couture.

Comme illustré sur la Figure 12, sur la même couture on réalise des fronces F que l'on bloque en cousant par-dessus le lien inextensible 17. Prévoir de telles fronces F permet d'augmenter l'amplitude de mouvement du tube gonflable 10 obtenu.

A ce stade, le lien inextensible 17 sépare chaque morceau M1, M2 en deux régions de part et d'autre du lien inextensible 17. Pour le morceau M1 situé sur le dessus, la région sur la gauche du lien inextensible 17 sur la Figure 12 est pliée vers le haut autour d'une ligne de pliage L1 (Figure 13), et la région extérieure est alors ramenée vers l'intérieur en suivant un arc de cercle, tandis que la région sur la droite du lien inextensible 17 est tout d'abord tournée vers le haut le long du lien inextensible 17, puis pliée vers l'extérieur autour d'une ligne de pliage L2 puis la région extérieure est ramenée vers le bas en suivant un arc de cercle.

On procède de manière analogue pour le morceau M2, la région sur la droite du lien inextensible 17 étant pliée vers le bas autour d'une ligne de pliage L3 puis ramenée vers l'intérieur en suivant un arc de cercle tandis que la région sur la gauche est pliée vers le bas le long du lien inextensible 17 puis pliée vers l'extérieur autour d'une ligne de pliage L4 puis ramenée vers le haut en suivant un arc de cercle.

On obtient alors la configuration illustrée sur la Figure 12, à partir de laquelle les bords longitudinaux libres sont assemblés par tout moyen approprié, comme par exemple par couture, à la partie adjacente du morceau M1 ou M2, pour obtenir le tube gonflable 10.

On constate donc que la fabrication du tube gonflable 10 peut être mise en œuvre aisément dans un contexte industriel.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

Ainsi, par exemple, la séparation du tube gonflable en compartiments indépendants pourrait être obtenue en utilisant des moyens de liaison inextensibles formés par des liens inextensibles du type de ceux utilisés dans le premier mode de réalisation des Figures 4 à 8. Les liens inextensibles appartenant au premier plan P1 pourront être fixés à un troisième lien inextensible et les liens inextensibles appartenant au second plan P2 pourront être fixés à un quatrième lien inextensible, sur le même principe que celui illustré sur les Figures 7 et 8. En variante, tous les liens inextensibles, qu'ils appartiennent au premier plan P1 ou au second plan P2, seront fixés à un même troisième lien inextensible s'étendant le long de l'axe central A de l'enveloppe 14.

De la même manière, bien que l'on ait illustré sur les dessins les cas où les paires de premier et deuxième moyens de liaison inextensibles sont réparties dans deux demi-plans longitudinaux (premier mode de réalisation) ou dans quatre demi-plans longitudinaux (second mode de réalisation), la présente invention n'est bien entendu pas limitée à ce nombre N de demi-plans longitudinaux, et l'on pourra prévoir que lesdites paires de premier et deuxième moyens de liaison inextensibles soient réparties dans trois, cinq, six, etc., demi-plans longitudinaux, qui ne sont pas obligatoirement à équidistance angulaire les uns des autres. Les moyens de liaison inextensibles pourront être, par exemple, des liens inextensibles ou des bandes de matière inextensible fibreuse comme décrits ci-dessus, qui s'étendent chacun ou chacune dans les deux demi-plans longitudinaux d'un même couple ou uniquement dans l'un des deux demi-plans longitudinaux d'un même couple.

## Revendications

1. Tube gonflable (1 ; 10) à géométrie variable et volume constant, comprenant une enveloppe gonflable (4 ; 14) en matériau souple étanche et possédant un axe central (A), le tube gonflable (1 ; 10) comprenant en outre des moyens de reprise de contrainte de tension longitudinale appliquée à l'enveloppe (4 ; 14) par la pression interne dans cette dernière, **caractérisé par le fait que** les moyens de reprise de contrainte comprennent des paires d'un premier (5 ; 15) et d'un deuxième (6 ; 16) moyen de liaison inextensible s'étendant à l'intérieur de l'enveloppe (4 ; 14), lesdites paires étant réparties dans N demi-plans longitudinaux (P11, P12) de l'enveloppe (4 ; 14), s'étendant chacun entre l'axe central (A) de l'enveloppe (4 ; 14) et une ligne génératrice respective de la surface de l'enveloppe (4 ; 14), N étant un entier diviseur de 360 et supérieur ou égal à 2, et **par le fait que**, dans chaque demi-plan longitudinal (P11, P12), le ou les premiers moyens de liaison inextensibles (5 ; 15) dudit demi-plan longitudinal (P11, P12) sont orientés suivant une première direction longitudinale qui est inclinée par rapport à l'axe central (A) de l'enveloppe (4 ; 14) et le ou les deuxièmes moyens de liaison inextensibles (6 ; 16) sont orientés suivant une seconde direction longitudinale qui est également inclinée par rapport à l'axe central (A) de l'enveloppe (4 ; 14), d'un même angle d'inclinaison que la première direction longitudinale, et les premier(s) (5 ; 15) et deuxième(s) (6 ; 16) moyens de liaison inextensibles sont fixés, à une première extrémité (5a, 6b, 5b, 6a), sur ladite ligne génératrice respective de la surface de l'enveloppe (4 ; 14) et passent par ou se terminent sur l'axe central (A) de l'enveloppe (4 ; 14), ce par quoi le tube gonflable (1 ; 10) est apte à être courbé autour de N premiers axes de pivotement (A1), chaque premier axe de pivotement (A1) à la fois se situant dans un demi-plan longitudinal respectif (P11, P12) et étant perpendiculaire à l'axe central (A) de l'enveloppe (4 ; 14), et autour de N seconds axes de pivotement (A2), chaque second axe de pivotement (A2) étant à la fois perpendiculaire à l'axe central (A) et perpendiculaire à l'un respectif des N premiers axes de pivotement (A1), les contraintes de tension longitudinale appliquées à l'enveloppe (4 ; 14) par la pression interne dans cette dernière étant concentrées sur l'axe central (A) par les premier(s) (5 ; 15) et deuxième(s) (6 ; 16) moyens de liaison inextensibles, que le tube gonflable (1 ; 10) soit courbé ou non.

2. Tube gonflable (1) selon la revendication 1, **caractérisé par le fait que** le ou chaque premier moyen de liaison inextensible (5) et le ou chaque deuxième moyen de liaison inextensible (6) sont formés respectivement par un premier (5) et un deuxième (6) lien inextensible.

3. Tube gonflable (1) selon la revendication 2, **caractérisé par le fait que** les moyens de reprise de contrainte comprennent, pour chaque demi-plan longitudinal (P11, P12), une série de premiers liens inextensibles (5) et une série de deuxièmes liens inextensibles (6), lesdits liens inextensibles (5, 6) étant disposés les uns à la suite des autres suivant l'axe central (A) de l'enveloppe (4) de façon à former une série de paires de premier et deuxième liens inextensibles (5, 6).

4. Tube gonflable (1) selon l'une quelconque des revendications 2 et 3, **caractérisé par le fait que** le nombre N de demi-plans longitudinaux (P11, P12) dans lesquels sont réparties les paires de premier et deuxième moyens de liaison inextensibles (5, 6) est pair, ce par quoi lesdites paires de premier et deuxième moyens de liaison inextensibles (5, 6) sont réparties dans un nombre N/2 de couples de demi-plans longitudinaux (P11, P12) définis de telle sorte que tout demi-plan longitudinal (P11, P12) est parallèle à l'autre demi-plan longitudinal (P11, P12) avec lequel il forme un couple, les premiers moyens de liaison inextensibles (5) de deux demi-plans longitudinaux (P11, P12) appartenant à un même couple étant formés par un premier lien inextensible (5) ou une série de premiers liens inextensibles (5) et les deuxièmes moyens de liaison inextensibles (6) desdits deux demi-plans longitudinaux (P11, P12) étant formés par un deuxième lien inextensible (6) ou une série de deuxièmes liens inextensibles (6), le ou les premiers liens inextensibles (5) croisant le ou les deuxièmes liens inextensibles (6) sur l'axe central (A) de l'enveloppe (4), des premières extrémités (5a, 6a) des premier(s) et deuxième(s) liens inextensibles (5, 6) étant fixées à une première région (4a) de l'enveloppe (4) tandis que des secondes extrémités (5b, 6b) des premier(s) et deuxième(s) liens inextensibles (5, 6) sont fixées à une seconde région (4B) de l'enveloppe (4), lesdites première et seconde régions (4A, 4B) de l'enveloppe (4) étant situées de part et d'autre, dans la direction de l'axe central (A) de l'enveloppe (4), du croisement (C) desdites première et seconde directions longitudinales, les premier(s) et deuxième(s) liens inextensibles (5, 6) rapprochant lesdites première et seconde régions (4a, 4b) de l'enveloppe (4) de manière à ce qu'à l'état mise en surpression, cette dernière ne présente pas de tension longitudinale.

5. Tube gonflable (1) selon la revendication 4, **caractérisé par le fait que** les premiers et deuxièmes liens inextensibles (5, 6) formant les premiers et deuxièmes moyens de liaison inextensibles de tout couple de demi-plans longitudinaux (P11, P12) sont placés suffisamment proches les uns des autres pour que chacun des premiers liens inextensibles (5) croise des deuxièmes liens inextensibles (6), et réciproquement, les premiers et deuxièmes liens inextensibles (5, 6) étant tous fixés à un unique troisième lien inextensible (9) qui s'étend le long de l'axe central (A) de l'enveloppe (4) ou tous les premiers et deuxièmes liens inextensibles (5, 6) appartenant au même couple de demi-plans longitudinaux (P11, P12) sont fixés à un lien inextensible (9) respectif qui s'étend le long de l'axe central (A) de l'enveloppe (4) .

6. Tube gonflable (1) selon l'une des revendications 4 et 5, **caractérisé par le fait que** le nombre N de demi-plans longitudinaux (P11, P12) dans lesquels sont réparties les paires de premier et deuxième moyens de liaison inextensibles est égal à 4, et les deux couples de demi-plans longitudinaux (P11, P12) sont, de préférence, perpendiculaires l'un à l'autre.

7. Tube gonflable (10) selon la revendication 1, **caractérisé par le fait que** les premier et deuxième moyens de liaison inextensible appartenant à un même demi-plan longitudinal comprennent une bande (15a, 15b, 16a, 16b) de matière inextensible fibreuse dont des premières fibres (F1) sont orientées suivant ladite première direction longitudinale et dont des secondes fibres (F2) sont orientées suivant ladite seconde direction longitudinale, chaque bande (15a, 15b, 16a, 16b) étant fixée, au niveau d'un bord longitudinal dit extérieur, à l'enveloppe (4), et étant reliée, au niveau d'un bord longitudinal dit intérieur, à un lien inextensible (17).

8. Tube gonflable (10) selon la revendication 7, **caractérisé par le fait que** le nombre N de demi-plans longitudinaux dans lesquels sont réparties les paires de premier et deuxième moyens de liaison inextensibles est égal à 4 et que les demi-plans longitudinaux sont à équidistance angulaire les uns des autres, le tube gonflable (10) comprenant un premier ensemble bande (15) formé par des première et deuxième desdites bandes (15a, 15b) s'étendant dans un premier plan longitudinal médian (P1) de l'enveloppe (14), et un second ensemble bande (16) formé par des troisième et quatrième desdites bandes (16a, 16b), lesdites troisième et quatrième bandes de matière (16a, 16b) s'étendant dans un second plan longitudinal médian (P2) de l'enveloppe (14) qui est perpendiculaire audit premier plan longitudinal médian (P1), chacune des première à quatrième bandes de matière (15a, 15b, 16a, 16b) étant reliée, au niveau d'un bord longitudinal dit intérieur, à un lien inextensible (17) qui s'étend le long de l'axe central (A) de l'enveloppe (4), et étant fixée, au niveau d'un bord longitudinal dit extérieur, à l'enveloppe (14) .

9. Tube gonflable (1 ; 10) selon l'une quelconque des revendications 1 à 8, **caractérisé par le fait que** l'enveloppe (4 ; 14) présente, le long de sa surface extérieure, des moyens (7) de guidage d'au moins un câble de commande (8) servant à courber le tube gonflable (1 ; 10).

10. Tube gonflable (10) selon l'une quelconque parmi la revendication 3, les revendications 4 à 6 lorsque prises en dépendance de la revendication 3, et les revendications 7 à 9, dans lequel les moyens de reprise de contrainte définissent à l'intérieur de l'enveloppe (14) un nombre N de compartiments (Cp1, Cp2, Cp3, Cp4) séparés les uns des autres par les moyens de liaison inextensibles, **caractérisé par le fait que** l'enveloppe (14) présente N chambres gonflables (Ch1, Ch2, Ch3, Ch4), chacune formées dans ou par un compartiment respectif (Cp1, Cp2, Cp3, Cp4), chaque chambre gonflable (Ch1, Ch2, Ch3, Ch4) comprenant une entrée de fluide et une sortie de fluide pour permettre le gonflage et le dégonflage de ladite chambre gonflable (Ch1, Ch2, Ch3, Ch4).

11. Tube gonflable (1 ; 10) selon l'une quelconque des revendications 1 à 10, **caractérisé par le fait que** l'enveloppe (4 ; 14) est formée par une toile dont les fibres sont disposées en biais par rapport à l'axe central (A) de l'enveloppe (4 ; 14), de préférence à un angle de 45°.

12. Tube gonflable (1 ; 10) selon l'une quelconque des revendications 1 à 11, **caractérisé par le fait que** les N demi-plans longitudinaux (P11, P12) sont à équidistance angulaire les uns des autres.

13. Bras robotisé, **caractérisé par le fait qu'**il comprend :
- au moins un tube gonflable (1 ; 10) selon l'une quelconque des revendications 1 à 12, ou plusieurs tels tubes gonflables (1 ; 10) en communication fluidique ou non les uns à la suite des autres,
- un outil porté à une extrémité distale du bras, laquelle extrémité distale est formée par l'extrémité d'un tube gonflable (1 ; 10) qui est obturée, notamment par des coutures ou par l'outil,
- des moyens d'actionnement de l'outil,
- des moyens de liaison étanche à des moyens d'injection de fluide dans le bras, notamment à une extrémité proximale du bras dans le cas où les tubes gonflables sont en communication fluidique les uns à la suite des autres, ou sinon à chacun des tubes gonflables, laquelle extrémité proximale est formée par une extrémité obturée ou non d'un tube gonflable (1 ; 10), et
- des moyens (8) de commande du mouvement du ou de chaque tube gonflable (1 ; 10) autour des N premier (s) et N second(s) axes de pivotement (A1, A2).

14. Robot **caractérisé par le fait qu'**il comprend au moins un bras robotisé selon la revendication 13, des moyens d'injection de fluide reliés de manière étanche à l'au moins un bras robotisé, notamment à l'extrémité proximale de ce dernier ou à chacun de ses tubes gonflables, pour injecter un fluide dans l'au moins un bras robotisé en vue de son gonflage, et des moyens de commande commandant les moyens (8) de commande du mouvement du ou de chaque tube gonflable et les moyens d'actionnement de l'outil.

15. Bras robotisé, **caractérisé par le fait qu'**il comprend :
- au moins un tube gonflable (1 ; 10) selon l'une quelconque des revendications 1 à 12, ou plusieurs tels tubes gonflables (1 ; 10) en communication fluidique ou non les uns à la suite des autres,
- un outil porté à une extrémité distale du bras, laquelle extrémité distale est formée par l'extrémité d'un tube gonflable (1 ; 10) qui est obturée, notamment par des coutures ou par l'outil,
- des moyens d'actionnement de l'outil,
- des moyens d'injection de fluide dans le bras, notamment à une extrémité proximale du bras dans le cas où les tubes gonflables sont en communication fluidique les uns à la suite des autres, ou sinon à chacun des tubes gonflables, laquelle extrémité proximale est formée par une extrémité obturée ou non d'un tube gonflable (1 ; 10), et
- des moyens de commande du mouvement du ou de chaque tube gonflable (1 ; 10) autour des N premier(s) et N second(s) axes de pivotement (A1, A2).

16. Robot **caractérisé par le fait qu'**il comprend au moins un bras robotisé selon la revendication 15, des moyens de commande des moyens d'injection de fluide et des moyens de commande commandant les moyens (8) de commande du mouvement du ou de chaque tube gonflable (1 ; 10) et les moyens d'actionnement de l'outil.

## Patentansprüche

1. Aufblasbarer Schlauch (1; 10) mit veränderlicher Geometrie und konstantem Volumen, umfassend eine aufblasbare Hülle (4; 14) aus einem dichten biegsamen Material und mit einer Mittelachse (A), wobei der aufblasbare Schlauch (1; 10) ferner Mittel zur Übernahme einer Längszugspannung, die auf die Hülle (4; 14) durch den internen Druck darin ausgeübt wird, umfasst, **dadurch gekennzeichnet, dass** die Mittel zur Spannungsübernahme Paare aus einem ersten (5; 15) und einem zweiten (6; 16) unausdehnbaren Verbindungsmittel umfassen, die sich im Innern der Hülle (4; 14) erstrecken, wobei die Paare in N Halblängsebenen (P11, P12) der Hülle (4; 14) verteilt sind, wobei sie sich jeweils zwischen der Mittelachse (A) der Hülle (4; 14) und einer jeweiligen Mantellinie der Oberfläche der Hülle (4; 14) erstrecken, wobei N ein ganzzahliger Teiler von 360 und größer oder gleich 2 ist, und dass in jeder Halblängsebene (P11, P12) das oder die ersten unausdehnbaren Verbindungsmittel (5; 15) der Halblängsebene (P11, P12) in einer ersten Längsrichtung orientiert sind, die im Verhältnis zur Mittelachse (A) der Hülle (4; 14) geneigt ist, und das oder die zweiten unausdehnbaren Verbindungsmittel (6; 16) in einer zweiten Längsrichtung orientiert sind, die ebenfalls im Verhältnis zur Mittelachse (A) der Hülle (4; 14) um einen gleichen Neigungswinkel wie die erste Längsrichtung geneigt ist, und das oder die ersten (5; 15) und das oder die zweiten (6; 16) unausdehnbaren Verbindungsmittel an einem ersten Ende (5a, 6b, 5b, 6a) auf der jeweiligen Mantellinie der Oberfläche der Hülle (4; 14) befestigt sind und über die Mittelachse (A) der Hülle (4; 14) gehen oder dort enden, wodurch der aufblasbare Schlauch (1; 10) um N erste Schwenkachsen (A1), wobei sich jede erste Schwenkachse (A1) gleichzeitig in einer jeweiligen Halblängsebene (P11, P12) befindet und zur Mittelachse (A) der Hülle (4; 14) rechtwinklig ist, und um N zweite Schwenkachsen (A2), wobei jede zweite Schwenkachse (A2) gleichzeitig zu der Mittelachse (A) und zu einer jeweiligen der N ersten Schwenkachsen (A1) rechtwinklig ist, herum gebogen werden kann, wobei sich die Längszugspannungen, die auf die Hülle (4; 14) durch den internen Druck darin ausgeübt werden, auf die Mittelachse (A) des oder der ersten (5; 15) und des oder der zweiten (6; 16) unausdehnbaren Verbindungsmittel konzentrieren, unabhängig davon ob der aufblasbare Schlauch (1; 10) gebogen ist oder nicht.

2. Aufblasbarer Schlauch (1) nach Anspruch 1, **dadurch gekennzeichnet, dass** das oder jedes erste unausdehnbare Verbindungsmittel (5) und das oder jedes zweite unausdehnbare Verbindungsmittel (6) jeweils aus einer ersten (5) und einer zweiten (6) unausdehnbaren Verbindung gebildet sind.

3. Aufblasbarer Schlauch (1) nach Anspruch 2, **dadurch gekennzeichnet, dass** die Mittel zur Spannungsübernahme für jede Halblängsebene (P11, P12) eine Reihe von ersten unausdehnbaren Verbindungen (5) und eine Reihe von zweiten unausdehnbaren Verbindungen (6) umfassen, wobei die unausdehnbaren Verbindungen (5, 6) an der Mittelachse (A) der Hülle (4) nacheinander angeordnet sind, um eine Reihe von Paaren von ersten und zweiten unausdehnbaren Verbindungen (5, 6) zu bilden.

4. Aufblasbarer Schlauch (1) nach einem der Ansprüche 2 und 3, **dadurch gekennzeichnet, dass** die Anzahl N von Halblängsebenen (P11, P12), in denen die Paare von ersten und zweiten unausdehnbaren Verbindungsmitteln (5, 6) verteilt sind, geradzahlig ist, wodurch die Paare von ersten und zweiten unausdehnbaren Verbindungsmitteln (5, 6) in einer Anzahl N/2 von geordneten Paaren von Halblängsebenen (P11, P12) verteilt sind, die derart definiert sind, dass jede Halblängsebene (P11, P12) parallel zu der anderen Halblängsebene (P11, P12) ist, mit der sie ein geordnetes Paar bildet, wobei die ersten unausdehnbaren Verbindungsmittel (5) von zwei Halblängsebenen (P11, P12), die zu demselben geordneten Paar gehören, aus einer ersten unausdehnbaren Verbindung (5) oder einer Reihe von ersten unausdehnbaren Verbindungen (5) gebildet sind, und die zweiten unausdehnbaren Verbindungsmittel (6) der beiden Halblängsebenen (P11, P12) durch eine zweite unausdehnbare Verbindung (6) oder eine Reihe von zweiten unausdehnbaren Verbindungen (6) gebildet sind, wobei sich die erste(n) unausdehnbare(n) Verbindung(en) (5) mit der oder den zweiten unausdehnbaren Verbindung (en) (6) auf der Mittelachse (A) der Hülle (4) kreuzen, wobei erste Enden (5a, 6a) der ersten und zweiten unausdehnbaren Verbindung(en) (5, 6) an einer ersten Region (4a) der Hülle (4) befestigt sind, während zweite Enden (5b, 6b) der ersten und zweiten unausdehnbaren Verbindung(en) (5, 6) an einer zweiten Region (4B) der Hülle (4) befestigt sind, wobei sich die ersten und zweiten Regionen (4A, 4B) der Hülle (4) in Richtung der Mittelachse (A) der Hülle (4) auf beiden Seiten der Kreuzung (C) der ersten und zweiten Längsrichtungen befinden, wobei die erste(n) und zweite(n) unausdehnbare(n) Verbindung(en) (5, 6) die ersten und zweiten Regionen (4a, 4b) der Hülle (4) derart zusammenführen, dass diese in einem Überdruckzustand keine Längsspannung aufweist.

5. Aufblasbarer Schlauch (1) nach Anspruch 4, **dadurch gekennzeichnet, dass** die ersten und zweiten unausdehnbaren Verbindungen (5, 6), welche die ersten und zweiten unausdehnbaren Verbindungsmittel aller geordneten Paare von Halblängsebenen (P11, P12) bilden, nahe genug aneinander angeordnet sind, damit sich jede der ersten unausdehnbaren Verbindungen (5) mit zweiten unausdehnbaren Verbindungen (6) kreuzt und umgekehrt, wobei die ersten und zweiten unausdehnbaren Verbindungen (5, 6) alle an einer einzigen dritten unausdehnbaren Verbindung (9) befestigt sind, die sich entlang der Mittelachse (A) der Hülle (4) erstreckt, oder alle ersten und zweiten unausdehnbaren Verbindungen (5, 6), die zu demselben geordneten Paar von Halblängsebenen (P11, P12) gehören, an einer jeweiligen unausdehnbaren Verbindung (9) befestigt sind, die sich entlang der Mittelachse (A) der Hülle (4) erstreckt.

6. Aufblasbarer Schlauch (1) nach einem der Ansprüche 4 und 5, **dadurch gekennzeichnet, dass** die Anzahl N von Halblängsebenen (P11, P12), in denen die Paare von ersten und zweiten unausdehnbaren Verbindungsmitteln verteilt sind, gleich 4 ist, und die beiden geordneten Paare von Halblängsebenen (P11, P12) bevorzugt rechtwinklig zueinander sind.

7. Aufblasbarer Schlauch (10) nach Anspruch 1, **dadurch gekennzeichnet, dass** die ersten und zweiten unausdehnbaren Verbindungsmittel, die zu derselben Halblängsebene gehören, ein Band (15a, 15b, 16a, 16b) aus einem unausdehnbaren Fasermaterial umfassen, dessen erste Fasern (F1) in der ersten Längsrichtung orientiert sind und dessen zweite Fasern (F2) in der zweiten Längsrichtung orientiert sind, wobei jedes Band (15a, 15b, 16a, 16b) an einem so genannten äußeren Längsrand an der Hülle (4) befestigt ist und an einem so genannten inneren Längsrand mit einer unausdehnbaren Verbindung (17) verbunden ist.

8. Aufblasbarer Schlauch (10) nach Anspruch 7, **dadurch gekennzeichnet, dass** die Anzahl N von Halblängsebenen, in denen die Paare von ersten und zweiten unausdehnbaren Verbindungsmitteln verteilt sind, gleich 4 ist, und dass die Halblängsebenen zueinander winkeläquidistant sind, wobei der aufblasbare Schlauch (10) eine erste Bandanordnung (15), die durch erste und zweite der Bänder (15a, 15b) gebildet ist, die sich in einer ersten Mittellängsebene (P1) der Hülle (14) erstrecken, und eine zweite Bandanordnung (16), die durch dritte und vierte der Bänder (16a, 16b) gebildet ist, umfasst, wobei sich die dritten und vierten Materialbänder (16a, 16b) in einer zweiten Mittellängsebene (P2) der Hülle (14) erstrecken, die zu der ersten Mittellängsebene (P1) rechtwinklig ist, wobei jedes der ersten bis vierten Materialbänder (15a, 15b, 16a, 16b) an einem so genannten inneren Längsrand mit einer unausdehnbaren Verbindung (17) verbunden ist, die sich entlang der Mittelachse (A) der Hülle (4) erstreckt, und an einem so genannten äußeren Längsrand an der Hülle (14) befestigt ist.

9. Aufblasbarer Schlauch (1; 10) nach einem der Ansprüche 1 bis 8, **dadurch gekennzeichnet, dass** die Hülle (4; 14) entlang ihrer Außenfläche Mittel (7) zum Führen mindestens eines Steuerkabels (8) aufweist, um den aufblasbaren Schlauch (1; 10) zu biegen.

10. Aufblasbarer Schlauch (10) nach einem von Anspruch 3, den Ansprüchen 4 bis 6 in Abhängigkeit von Anspruch 3 und den Ansprüchen 7 bis 9, wobei die Mittel zur Spannungsübernahme im Innern der Hülle (14) eine Anzahl N von Abteilungen (Cp1, Cp2, Cp3, Cp4) bilden, die durch die unausdehnbaren Verbindungsmittel voneinander getrennt sind, **dadurch gekennzeichnet, dass** die Hülle (14) N aufblasbare Kammern (Ch1, Ch2, Ch3, Ch4) aufweist, die jeweils in oder durch eine jeweilige Abteilung (Cp1, Cp2, Cp3, Cp4) gebildet sind, wobei jede aufblasbare Kammer (Ch1, Ch2, Ch3, Ch4) einen Fluideingang und einen Fluidausgang umfasst, um das Aufblasen und Entleeren der aufblasbaren Kammer (Ch1, Ch2, Ch3, Ch4) zu ermöglichen.

11. Aufblasbarer Schlauch (1; 10) nach einem der Ansprüche 1 bis 10, **dadurch gekennzeichnet, dass** die Hülle (4; 14) durch einen Stoff gebildet ist, dessen Fasern im Verhältnis zur Mittelachse (A) der Hülle (4; 14) bevorzugt in einem Winkel von 45° schräg angeordnet sind.

12. Aufblasbarer Schlauch (1; 10) nach einem der Ansprüche 1 bis 11, **dadurch gekennzeichnet, dass** die N Halblängsebenen (P11, P12) zueinander winkeläquidistant sind.

13. Roboterarm, **dadurch gekennzeichnet, dass** er umfasst:
- mindestens einen aufblasbaren Schlauch (1; 10) nach einem der Ansprüche 1 bis 12 oder mehrere derartige aufblasbare Schläuche (1; 10) nacheinander in Fluidkommunikation oder nicht,
- ein Werkzeug, das an einem distalen Ende des Arms getragen wird, wobei das distale Ende durch das Ende eines aufblasbaren Schlauchs (1; 10) gebildet ist, das insbesondere durch Nähte oder das Werkzeug verschlossen ist,
- Mittel zum Betätigen des Werkzeugs,
- Mittel zur dichten Verbindung mit Mitteln zum Einspritzen von Fluid in den Arm, insbesondere an einem proximalen Ende des Arms, falls die aufblasbaren Schläuche nacheinander in Fluidkommunikation stehen, oder ansonsten an jedem der aufblasbaren Schläuche, wobei das proximale Ende durch ein Ende gebildet ist, das durch einen aufblasbaren Schlauch (1; 10) verschlossen ist oder nicht, und
- Mittel (8) zum Steuern der Bewegung des oder jedes aufblasbaren Schlauchs (1; 10) um die N ersten und N zweiten Schwenkachsen (A1, A2) herum.

14. Roboter, **dadurch gekennzeichnet, dass** er mindestens einen Roboterarm nach Anspruch 13, Mittel zum Einspritzen von Fluid, die mit mindestens einem Roboterarm insbesondere am proximalen Ende desselben oder an jedem seiner aufblasbaren Schläuche dicht verbunden sind, um ein Fluid in den mindestens einen Roboterarm einzuspritzen, um ihn aufzublasen, und Steuermittel, welche die Mittel (8) zum Steuern der Bewegung des oder jedes aufblasbaren Schlauchs und die Mittel zum Betätigen des Werkzeugs steuern, umfasst.

15. Roboterarm, **dadurch gekennzeichnet, dass** er umfasst:
- mindestens einen aufblasbaren Schlauch (1; 10) nach einem der Ansprüche 1 bis 12, oder mehrere derartige aufblasbare Schläuche (1; 10) nacheinander in Fluidkommunikation oder nicht,
- ein Werkzeug, das an einem distalen Ende des Arms getragen wird, wobei das distale Ende durch das Ende eines aufblasbaren Schlauchs (1; 10) gebildet ist, das insbesondere durch Nähte oder durch das Werkzeug verschlossen ist,
- Mittel zum Betätigen des Werkzeugs,
- Mittel zum Einspritzen von Fluid in den Arm, insbesondere an einem proximalen Ende des Arms, falls die aufblasbaren Schläuche nacheinander in Fluidkommunikation stehen, oder ansonsten an jedem der aufblasbaren Schläuche, wobei das proximale Ende durch ein Ende gebildet ist, das durch einen aufblasbaren Schlauch (1; 10) verschlossen ist oder nicht, und
- Mittel zum Steuern der Bewegung des oder jedes aufblasbaren Schlauchs (1; 10) um die N ersten und N zweiten Schwenkachsen (A1, A2) herum.

16. Roboter, **dadurch gekennzeichnet, dass** er mindestens einen Roboterarm nach Anspruch 15, Mittel zum Steuern der Mittel zum Fluideinspritzen und Steuermittel, welche die Mittel (8) zum Steuern der Bewegung des oder jedes aufblasbaren Schlauchs (1; 10) steuern, und Mittel zum Betätigen des Werkzeugs umfasst.

## Claims

1. A variable geometry and constant-volume inflatable tube (1; 10), comprising an inflatable envelope (4; 14) made of impermeable flexible material and having a central axis (A), the inflatable tube (1; 10) further comprising means for bearing longitudinal tensile stress applied to the envelope (4; 14) by the internal pressure within the latter, **characterized in that** the stress-bearing means comprise pairs of a first (5; 15) and a second (6; 16) inextensible linking means extending inside the envelope (4; 14), said pairs being distributed in N longitudinal half-planes (P11, P12) of the envelope (4; 14), each extending between the central axis (A) of the envelope (4; 14) and a respective generatrix of the surface of the envelope (4; 14), N being an integer divisor of 360 and greater than or equal to 2, and **in that**, in each longitudinal half-plane (P11, P12), the one or more first inextensible linking means (5; 15) of said longitudinal half-plane (P11, P12) are oriented along a first longitudinal direction which is inclined with respect to the central axis (A) of the envelope (4; 14) and the one or more second inextensible linking means (6; 16) are oriented along a second longitudinal direction which is also inclined with respect to the central axis (A) of the envelope (4; 14), at a same angle of inclination as the first longitudinal direction, and the one or more first (5; 15) and the one or more second (6; 16) inextensible linking means are attached, at a first end (5a, 6b, 5b, 6a), to said respective generatrix of the surface of the envelope (4; 14) and pass through or end on the central axis (A) of the envelope (4; 14), whereby the inflatable tube (1; 10) is bendable around N first pivot axes (A1), each first pivot axis (A1) both being located in a respective longitudinal half-plane (P11, P12) and being perpendicular to the central axis (A) of the envelope (4; 14), and around N second pivot axes (A2), each second pivot axis (A2) being both perpendicular to the central axis (A) and perpendicular to a respective one of the N first pivot axes (A1), the longitudinal tensile stresses applied to the envelope (4; 14) by the internal pressure within the latter being concentrated on the central axis (A) by the one or more first (5; 15) and the one or more second (6; 16) inextensible linking means, whether or not the inflatable tube (1; 10) is bent.

2. The inflatable tube (1) according to claim 1, **characterized in that** the or each first inextensible linking means (5) and the or each second inextensible linking means (6) are respectively formed by a first (5) and a second (6) inextensible link.

3. The inflatable tube (1) according to claim 2, **characterized in that** the stress-bearing means comprise, for each longitudinal half-plane (P11, P12), a series of first inextensible links (5) and a series of second inextensible links (6), said inextensible links (5, 6) being arranged behind one another along the central axis (A) of the envelope (4) so as to form a series of pairs of first and second inextensible links (5, 6).

4. The inflatable tube (1) according to any one of claims 2 and 3, **characterized in that** the number N of longitudinal half-planes (P11, P12) in which the pairs of first and second inextensible linking means (5, 6) are distributed is even, whereby said pairs of first and second inextensible linking means (5, 6) are distributed in a number N/2 of couples of longitudinal half-planes (P11, P12) defined such that any longitudinal half-plane (P11, P12) is parallel to the other longitudinal half-plane (P11, P12) with which it forms a couple, the first inextensible linking means (5) of two longitudinal half-planes (P11, P12) belonging to a same couple being formed by a first inextensible link (5) or a series of first inextensible links (5) and the second inextensible linking means (6) of said two longitudinal half-planes (P11, P12) being formed by a second inextensible link (6) or a series of second inextensible links (6), the one or more first inextensible links (5) crossing the one or more second inextensible links (6) on the central axis (A) of the envelope (4), first ends (5a, 6a) of the one or more first and the one or more second inextensible links (5, 6) being attached to a first region (4a) of the envelope (4) while second ends (5b, 6b) of the one or more first and the one or more second inextensible links (5, 6) are attached to a second region (4B) of the envelope (4), said first and second regions (4A, 4B) of the envelope (4) being located on either side, in the direction of the central axis (A) of the envelope (4), of the crossing (C) of said first and second longitudinal directions, the one or more first and the one or more second inextensible links (5, 6) bringing said first and second regions (4a, 4b) of the envelope (4) closer such that, when over-pressurized, the latter does not have any longitudinal tension.

5. The inflatable tube (1) according to claim 4, **characterized in that** the first and second inextensible links (5, 6) forming the first and second inextensible linking means of any couple of longitudinal half-planes (P11, P12) are placed sufficiently close to one another such that each of the first inextensible links (5) crosses second inextensible links (6), and vice versa, the first and second inextensible links (5, 6) all being attached to a single third inextensible link (9) which extends along the central axis (A) of the envelope (4) or all the first and second inextensible links (5, 6) belonging to the same couple of longitudinal half-planes (P11, P12) are attached to a respective inextensible link (9) which extends along the central axis (A) of the envelope (4).

6. The inflatable tube (1) according to one of claims 4 and 5, **characterized in that** the number N of longitudinal half-planes (P11, P12) in which the pairs of first and second inextensible linking means are distributed is equal to 4, and both couples of longitudinal half-planes (P11, P12) are, preferably, perpendicular to each other.

7. The inflatable tube (10) according to claim 1, **characterized in that** the first and second inextensible linking means belonging to a same longitudinal half-plane comprise a strip (15a, 15b, 16a, 16b) made of fibrous inextensible material, first fibers of which (F1) are oriented along said first longitudinal direction and second fibers (F2) of which are oriented along said second longitudinal direction, each strip (15a, 15b, 16a, 16b) being attached, at a so-called external longitudinal edge, to the envelope (4), and being connected, at a so-called internal longitudinal edge, to an inextensible link (17).

8. The inflatable tube (10) according to claim 7, **characterized in that** the number N of longitudinal half-planes in which the pairs of first and second inextensible linking means are distributed is equal to 4 and **in that** the longitudinal half-planes are at equal angular distances from one another, the inflatable tube (10) comprising a first strip assembly (15) formed by first and second ones of said strips (15a, 15b) extending in a first longitudinal mid-plane (P1) of the envelope (14), and a second strip assembly (16) formed by third and fourth ones of said strips (16a, 16b), said third and fourth strips (16a, 16b) extending in a second longitudinal mid-plane (P2) of the envelope (14) which is perpendicular to said first longitudinal mid-plane (P1), each of the first to fourth strips of material (15a, 15b, 16a, 16b) being connected, at a so-called internal longitudinal edge, to an inextensible link (17) which extends along the central axis (A) of the envelope (4), and being attached, at a so-called external longitudinal edge, to the envelope (14).

9. The inflatable tube (1; 10) according to any one of claims 1 to 8, **characterized in that** the envelope (4; 14) has, along its external surface, means (7) for directing at least one control cable (8) that is for bending the inflatable tube (1; 10).

10. The inflatable tube (10) according to any one of claim 3, claims 4 to 6 when taken depending on claim 3, and claims 7 to 9, wherein the stress-bearing means define, inside the envelope (14), a number N of compartments (Cp1, Cp2, Cp3, Cp4) separated from one another by the inextensible linking means, **characterized in that** the envelope (14) has N inflatable chambers (Ch1, Ch2, Ch3, Ch4), each formed in or by a respective compartment (Cp1, Cp2, Cp3, Cp4), each inflatable chamber (Ch1, Ch2, Ch3, Ch4) comprising a fluid inlet and a fluid outlet so as to allow the inflation and the deflation of said inflatable chamber (Ch1, Ch2, Ch3, Ch4).

11. The inflatable tube (1; 10) according to any one of claims 1 to 10, **characterized in that** the envelope (4; 14) is formed by a fabric the fibers of which are arranged aslant with respect to the central axis (A) of the envelope (4; 14), preferably at an angle of 45°.

12. The inflatable tube (1; 10) according to any one of claims 1 to 11, **characterized in that** the N longitudinal half-planes (P11, P12) are at equal angular distances from one another.

13. A robotic arm, **characterized in that** it comprises:
- at least one inflatable tube (1; 10) according to any one of claims 1 to 12, or several such inflatable tubes (1; 10) which are, or not, in fluid communication in succession,
- a tool carried at a distal end of the arm, which distal end is formed by the end of an inflatable tube (1; 10) that is closed, for instance by seams or by the tool,
- means for actuating the tool,
- means for sealingly linking to fluid injection means for injecting a fluid into the arm, for instance at a proximal end of the arm in case the inflatable tubes are in fluid communication in succession, or otherwise at each of the inflatable tubes, said proximal end being formed by an end, which is closed or not, of the inflatable tube (1; 10), and
- means (8) for controlling the motion of the or each inflatable tube (1; 10) around the one or more first N and the one or more second N pivot axes (A1, A2).

14. A robot **characterized in that** it comprises at least one robotic arm according to claim 13, fluid injection means sealingly linked to the at least one robotic arm, for instance at the proximal end of the latter or at each of its inflatable tubes, so as to inject a fluid into the at least one robotic arm for its inflation, and control means controlling the means (8) for controlling the motion of the or each inflatable tube and the means for actuating the tool.

15. A robotic arm, **characterized in that** it comprises:
- at least one inflatable tube (1; 10) according to any one of claims 1 to 12, or several such inflatable tubes (1; 10) which are, or not, in fluid communication in succession,
- a tool carried at a distal end of the arm, said distal end being formed by the end of an inflatable tube (1; 10) that is closed, for instance by seams or by the tool,
- means for actuating the tool,
- fluid injection means for injecting a fluid into the arm, for instance at a proximal end of the arm in case the inflatable tubes are in fluid communication in succession, or otherwise at each of the inflatable tubes, said proximal end being formed by an end, which is closed or not, of an inflatable tube (1; 10), and
- means for controlling the motion of the or each inflatable tube (1; 10) around the one or more first N and the one or more second N pivot axes (A1, A2).

16. A robot **characterized in that** it comprises at least one robotic arm according to claim 15, means for controlling the fluid injection means and control means controlling the means (8) for controlling the motion of the or each inflatable tube (1; 10) and the means for actuating the tool.
